# FASCICULE DE BREVET EUROPEEN

(11) **EP 3 856 503 B1**
(45) Date de publication et mention de la délivrance du brevet: **02.11.2022**
(21) Numéro de dépôt: 19795037.1
(22) Date de dépôt: 24.09.2019
(51) Int. Cl.: B29D 30/00, B29D 30/72

(54) **PROCÉDÉ DE MARQUAGE D'UN PNEUMATIQUE, NOTAMMENT PAR IMPRESSION COULEUR**
VERFAHREN ZUR MARKIERUNG EINES REIFENS, INSBESONDERE DURCH FARBDRUCK
METHOD FOR MARKING A TYRE, IN PARTICULAR BY COLOR PRINTING

(30) Priorité: 24.09.2018 FR 1858659
(43) Date de publication de la demande: 04.08.2021
(73) Titulaire: COMPAGNIE GENERALE DES ETABLISSEMENTS MICHELIN, 63000 Clermont-Ferrand (FR)
(72) Inventeur: MUHLHOFF, Olivier, 63040 CLERMONT-FERRAND CEDEX 09 (FR); DJABOUR, Walid, 63040 CLERMONT-FERRAND CEDEX 09 (FR)
(74) Mandataire: Desbordes, Guillaume
(86) Numéro de dépôt international: PCT/FR2019/052230
(87) Numéro de publication internationale: WO 2020/065197

(56) Documents cités:
- EP-A2- 1 207 061
- US-A1- 2004 095 244

## Description

La présente invention concerne les domaines des pneumatiques pour véhicules.

Plus particulièrement, l'invention concerne un procédé de marquage d'un pneumatique, notamment par impression couleur.

Un pneumatique présente une grande quantité de marquages destinés à donner des informations techniques, légales ou à permettre aux consommateurs de distinguer la marque du produit, ou encore à donner des informations pour identification de stock, d'un numéro de série individuel, etc.

Par ailleurs, les marquages peuvent être aussi utilisés pour donner un aspect original au pneumatique, ou encore pour masquer des déformations locales générées lors de la fabrication du pneumatique et pouvant être visibles au niveau des flancs, notamment sous certaines conditions d'éclairage.

De tels marquages peuvent par exemple être colorés et apposés sur le flanc du pneumatique. Il est par exemple possible d'obtenir de tels marquages colorés par impression par jet d'encre ou encore par dépose d'une couche de peinture après vulcanisation du pneumatique. Pour plus de détail, on pourra par exemple se référer au brevet US 5, 015, 505 qui traite d'une telle dépose de couche de peinture sur le flanc du pneumatique. Il est aussi possible de réaliser des marquages colorés par transfert d'un film de couleur.

Toutefois, en milieu industriel, de tels marquages colorés venant juste d'être apposés sur le flanc d'un pneumatique peuvent être détériorés lorsque s'enchainent rapidement les différentes étapes de fabrication.

Par exemple, avant que la phase complète de séchage et de durcissement du marquage ne soit finalisée, le pneumatique peut être démonté de la jante dite industrielle sur laquelle il est monté spécifiquement pour l'étape de marquage, puis être acheminé ensuite aux postes suivants du procédé de fabrication.

La présente invention vise à remédier à cet inconvénient.

L'invention concerne un procédé de marquage d'un pneumatique du type comprenant une bande de roulement et deux flancs délimitant ladite bande de roulement.

L'invention concerne un procédé de marquage d'un pneumatique du type comprenant une bande de roulement et deux flancs délimitant ladite bande de roulement.

Le procédé comprend une étape de réalisation, sur au moins un des flancs du pneumatique monté sur une jante, d'au moins un marquage qui est au moins en partie coloré.

Selon une caractéristique générale de l'invention, le procédé comprend en outre, avant l'étape de réalisation dudit marquage, au moins une étape de gonflage du pneumatique monté sur la jante, et une étape d'équilibrage de l'ensemble formé par la jante et le pneumatique à l'état gonflé.

Par « pneumatique », on entend tous les types de bandages élastiques.

On entend par « matériau caoutchoutique », un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule. La bande de roulement comprend une pluralité de découpures se prolongeant sur au moins une des surfaces latérales.

Par « flanc » d'un pneumatique, on entend une partie de la surface latérale du pneumatique disposée entre la bande de roulement du pneumatique et un bourrelet de ce pneumatique, débutant à partir des extrémités des découpures de la bande de roulement et se prolongeant jusqu'au bourrelet.

Par « marquage au moins en partie coloré », on entend tout élément ou revêtement au moins en partie coloré qui est prévu sur le flanc du pneumatique. Le terme « coloré » est entendu ici comme excluant la couleur noire, c'est-à-dire toutes les couleurs y compris le blanc. Autrement dit, le marquage présente au moins une couleur qui est différente de la couleur globalement noire du matériau caoutchoutique du pneumatique.

Les étapes de gonflage, d'équilibrage et réalisation dudit marquage sont effectuées après vulcanisation du pneumatique.

Par « équilibrage » d'un pneumatique, on entend l'étape qui consiste à fixer sur la jante dudit pneumatique une ou des masses supplémentaires, qui peuvent par exemple être réalisées en acier, en zamak ou à base de plomb.

Avec le procédé de l'invention, le marquage du pneumatique est donc réalisé à l'état monté sur sa jante dite « finale », c'est-à-dire la jante qui est destinée à être montée sur le véhicule, et après gonflage et équilibrage de l'ensemble pneumatique-jante.

Ceci présente l'avantage de diminuer le nombre d'opérations à effectuer sur le pneumatique pour constituer l'ensemble roue composé de la jante et du pneumatique. Les risques de détérioration du marquage sont alors plus limités.

En effet, un avantage de marquer le pneumatique déjà monté sur sa jante finale est de limiter les déformations du flanc supportant le marquage, et donc les déformations de ce marquage, dans la mesure où le pneumatique n'a pas besoin d'être démonté de sa jante à la fin du procédé de marquage, par rapport à un marquage sur une jante dite industrielle.

En outre, dans la mesure où l'étape d'équilibrage est prévue avant l'étape de réalisation du marquage, cela permet de marquer uniquement les pneumatiques qui respectent les tolérances d'équilibrage, et donc d'éviter tout démontage d'un pneumatique marqué de sa jante finale.

On s'assure ainsi qu'il n'y aura aucune opération ultérieure de démontage du pneumatique de sa jante entre le marquage et le montage de l'ensemble pneumatique-jante sur le véhicule.

Par ailleurs, un autre avantage du marquage du pneumatique monté sur la jante finale et équilibré est de permettre à ce marquage de sécher et de durcir en conservant une pression interne à l'intérieur du pneumatique sans qu'il soit forcément nécessaire de réaliser cette phase de séchage et de durcissement sur la machine de marquage.

Cela permet donc d'économiser le temps nécessaire pour réaliser le séchage et le durcissement du marquage directement sur la machine. Or, une phase complète de séchage et de durcissement du marquage peut durer entre plusieurs minutes et plusieurs heures selon la nature des produits utilisés pour le marquage.

Par ailleurs, dans les phases qui suivent le marquage du pneumatique à l'état gonflé, par exemple lors de son acheminement vers la chaine de montage du véhicule, la pression de gonflage interne à laquelle est soumis le pneumatique monté sur sa jante finale permet de conserver le maintien en position du flanc supportant le marquage avec très peu de déformation, même lorsque le pneumatique est manipulé.

De préférence, la position du pneumatique est la même lors de l'étape de réalisation dudit marquage et lors de l'étape d'équilibrage. Cela permet d'accroitre l'ergonomie pour l'opérateur lorsque les deux postes d'équilibrage et de marquage se suivent.

Avantageusement, le pneumatique est en position verticale lors de l'étape de réalisation dudit marquage dans la mesure où cela correspond à la position du pneumatique sur une machine d'équilibrage industrielle conventionnelle. Alternativement, il reste possible de positionner le pneumatique en position horizontale lors de l'étape de réalisation dudit marquage et/ou lors de l'étape d'équilibrage.

Dans un mode de mise en œuvre optionnel, lors de l'étape d'équilibrage, les masses d'équilibrage sont fixées uniquement sur la jante, uniquement du côté destiné à être monté du côté intérieur du véhicule. Cela permet de rendre moins visibles ces masses d'équilibrage pour le consommateur par rapport à une fixation sur le crochet de jante de la jante qui est présent au niveau de la couronne de la jante.

De préférence, lors de ladite étape de gonflage, le pneumatique est gonflé à une pression supérieure ou égale à la pression de gonflage nominale dudit pneumatique.

Par « pression de gonflage nominale » d'un pneumatique, on entend la pression de gonflage recommandée par le constructeur du véhicule devant être équipé du pneumatique pour son usage normal, cette pression pouvant être différente entre l'essieu avant et l'essieu arrière d'un même véhicule.

Réaliser le marquage lorsque le pneumatique est soumis à une pression interne supérieure à la pression de gonflage nominale présente l'avantage de mettre en légère compression le marquage lorsque cette pression interne est par la suite réduite, par exemple avant la livraison du pneumatique au consommateur, pour être ajustée à la pression de gonflage nominale.

Au contraire, avec un marquage réalisé sur le flanc à l'état gonflé à une pression interne inférieure à la pression de gonflage nominale, le marquage obtenu est mis en extension lorsque la pression interne du pneumatique est augmentée ultérieurement à la pression de gonflage nominale.

Avec ce mode de mise en œuvre particulier du procédé de marquage, le marquage réalisé est donc mis en compression lorsque la pression interne du pneumatique est ramenée à la pression de gonflage nominale de celui-ci, ce qui réduit sensiblement le risque de fissuration du marquage avant livraison au consommateur par rapport à un marquage qui est mis en extension à cette pression de gonflage nominale. Par ailleurs, lors de l'utilisation du pneumatique, avec un marquage ainsi comprimé, la vitesse d'apparition de fissures de surface dudit marquage et la vitesse de propagation de ces fissures sont aussi réduites.

A titre indicatif, lors de ladite étape de gonflage, le pneumatique peut être gonflé à une pression comprise entre 105 % et 300 % de la pression de gonflage nominale dudit pneumatique, préférentiellement entre 120 % et 180 %.

Dans un mode alternatif de mise en œuvre du procédé, le marquage du pneumatique à l'état gonflé peut toutefois être réalisé à une pression inférieure ou égale à la pression de gonflage nominale dudit pneumatique.

De préférence, le marquage est réalisé à l'aide d'au moins une tête d'application de produit de marquage.

Dans un mode de mise en œuvre particulier, le marquage peut être réalisé par impression couleur sur ledit flanc. Dans ce cas, la ou les têtes d'application sont des têtes d'impression, notamment par impression couleur par jet d'encre. En variante, le marquage peut être réalisé par dépose d'une ou plusieurs couches de peinture et/ou de vernis. Alternativement, le marquage peut encore être réalisé par transfert à froid ou à chaud d'un film de couleur.

Le pneumatique peut être entrainé en rotation lors de l'étape de réalisation dudit marquage. Alternativement ou en combinaison, ladite tête peut être entrainée en rotation lors de l'étape de réalisation dudit marquage. De préférence, ladite tête et/ou le pneumatique sont entrainés en rotation à vitesse constante lors de cette étape.

Dans un mode de mise en œuvre particulièrement avantageux, uniquement le pneumatique est entraîné en rotation lors de l'étape de réalisation dudit marquage.

Cela permet de garantir la coaxialité entre le marquage et le crochet de jante. Ceci est particulièrement avantageux lorsque le marquage se présente sous la forme d'une surface annulaire, notamment lorsque cette surface est située en zone basse du flanc du pneumatique. Un marquage en zone basse du flanc du pneumatique cherche à augmenter visuellement le diamètre de roue et donne l'illusion que le pneumatique est du type taille basse. Par « pneumatique à taille basse », on entend un pneumatique dont la hauteur de flanc est assez faible en regard de la largeur de la bande de roulement.

Avantageusement, le pneumatique peut être entraîné en rotation par l'intermédiaire de l'alésage du moyeu de la jante lors de l'étape de réalisation dudit marquage. Ceci favorise encore l'obtention d'une bonne coaxialité entre le marquage et le crochet de jante.

Dans un mode de mise en œuvre particulier, le procédé comprend une étape de séchage et de durcissement dudit marquage réalisé sur ledit flanc du pneumatique à l'aide d'un dispositif pour le séchage et le durcissement. Ce dispositif peut par exemple être une lampe ultraviolet ou une lampe infrarouge ou encore un moyen de soufflage d'air chaud.

L'étape de séchage et de durcissement peut être réalisée de sorte à obtenir un séchage et un durcissement partiel ou complet du marquage sur la machine de marquage associée.

Comme indiqué précédemment, la phase de séchage et de durcissement du marquage peut être réalisée que partiellement sur la machine de marquage associée, voire être réalisée entièrement hors de la machine de marquage.

Dans un mode de mise en œuvre particulier, le procédé peut comprendre en outre, après l'étape d'équilibrage et avant l'étape de réalisation dudit marquage, une étape de gonflage additionnelle du pneumatique à une pression de gonflage supérieure à la pression de gonflage nominale dudit pneumatique.

Cette étape de gonflage additionnelle avant la réalisation du marquage permet de maitriser la qualité du marquage réalisé ainsi que sa résistance au vieillissement dans l'hypothèse où l'étape de gonflage préalable aurait été faite de façon non précise dans son exécution industrielle.

Lorsque ladite étape de gonflage additionnelle du pneumatique à une pression de gonflage supérieure à la pression de gonflage nominale dudit pneumatique est prévue, le procédé peut aussi comprendre en outre une étape de dégonflage spécifique du pneumatique à la pression de gonflage nominale après la fin de la phase de séchage et de durcissement dudit marquage.

Par ailleurs, le procédé peut également comprendre une étape de montage du pneumatique sur la jante avant la ou les étapes de gonflage. Il est également possible de réaliser la ou les étapes de gonflage sur un pneumatique qui est déjà à l'état monté sur sa jante.

Dans un mode de mise en œuvre particulier, ledit marquage est réalisé sur une surface dudit flanc qui présente une rugosité de surface de paramètre Rₐ inférieure ou égale à 30 µm.

Ainsi, cette surface du flanc à colorer est globalement lisse. Cela permet de favoriser l'obtention d'un marquage de bonne qualité. Dans ce but, la rugosité de surface de paramètre Rₐ est de préférence inférieure ou égale à 15 µm, et notamment inférieure ou égale à 5 µm, et supérieure ou égale à 5 µm.

Dans un mode de mise en œuvre particulier, la surface dudit marquage réalisé peut être au moins égale à 6 cm². Ledit marquage peut comprendre une unique zone au moins en partie colorée ou être constituée de plusieurs zones au moins en partie colorées et espacées les unes par rapport aux autres. Dans une variante de réalisation, ledit marquage forme globalement une surface annulaire sur ledit flanc du pneumatique. De sorte à être particulièrement visible, ledit marquage peut être situé sensiblement au niveau de l'équateur du flanc du pneumatique, c'est-à-dire à l'endroit où il est le plus large.

Ledit marquage peut comprendre des lettres, et/ou des signes, et/ou des chiffres pour indiquer des informations techniques du pneumatique. Ledit marquage peut également comprendre des informations légales ou distinctives de la marque du pneumatique ou encore des codes à barres pour identification de stock, un numéro de série individuel dudit pneumatique, etc.

Afin de limiter les coûts de fabrication du pneumatique, ledit marquage est de préférence réalisé uniquement sur le flanc extérieur du pneumatique, i.e. le flanc destiné à être positionné du côté extérieur du véhicule.

Dans un mode de mise en œuvre particulier, ledit marquage peut être réalisé sur la surface latérale dudit flanc du pneumatique. Alternativement, ledit marquage peut être réalisé à l'intérieur d'un logement en creux formé sur cette surface latérale dudit flanc.

La présente invention sera mieux comprise à la lecture de la description détaillée d'un mode de réalisation pris à titre d'exemple nullement limitatif et illustré par les dessins annexés sur lesquels :
- la figure 1 est une vue partielle de côté d'un pneumatique qui comprend un marquage réalisé sur un flanc du pneumatique selon un exemple de réalisation de l'invention,
- la figure 2 est un organigramme d'un procédé de marquage du pneumatique selon un premier exemple de mise en œuvre de l'invention, et
- la figure 3 est un organigramme d'un procédé de marquage du pneumatique selon un deuxième exemple de mise en œuvre de l'invention.

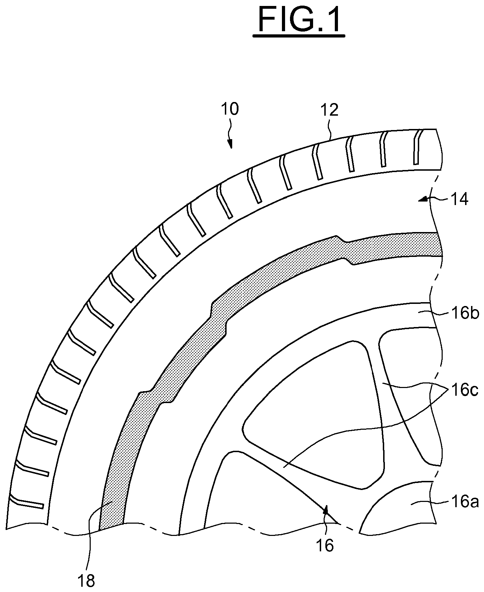

Sur la figure 1 est représenté schématiquement un pneumatique 10 comprenant une bande de roulement 12 et des flancs 14 latéraux entourant de part et d'autre la bande de roulement, un seul étant visible sur la figure. La bande de roulement 12 comprend une surface de roulement destinée à venir en contact avec une chaussée lors du roulage. Le pneumatique 10 est monté sur une jante 16, qui est la jante finale ou définitive destinée à être montée sur le véhicule. La jante 16 comprend un moyeu 16a, une couronne 16b extérieure et une pluralité de rayons 16c reliant le moyeu à la couronne.

Le flanc 14 comprend un marquage 18 coloré. Sur la figure 1, le marquage 18 a été représenté en couleur grise. Dans l'exemple de réalisation illustré, le marquage 18 forme sur le flanc 14 du pneumatique, une surface globalement annulaire en forme d'anneau continu centré sur l'axe de rotation du pneumatique. Alternativement, il est possible de prévoir d'autres formes et/ou d'autres dispositions par rapport à l'axe de rotation du pneumatique. Le marquage 18 peut par exemple être discontinu dans le sens circonférentiel. Dans ce cas, le marquage 18 peut être composé d'une pluralité de zones colorées qui sont espacées les unes aux autres sur le flanc dans le sens circonférentiel et/ou dans le sens radial. Les zones colorées peuvent présenter une forme extérieure identique ou des formes différentes. Les zones colorées peuvent par exemple présenter des formes carrées, hexagonales, rectangulaires ou encore en parallélogramme.

Le marquage 18 peut avantageusement être réalisé sur le flanc 14 après vulcanisation du pneumatique par impression couleur à l'aide d'une ou plusieurs têtes d'impression comme cela sera décrit plus en détail par la suite. En variante, il est possible de réaliser différemment le marquage 18 coloré, par exemple par dépose de peinture, de vernis, ou encore par transfert à froid ou à chaud.

Le marquage 18 présente au moins une couleur qui est différente de la couleur globalement noire du matériau caoutchoutique du pneumatique. Le marquage 18 peut présenter plusieurs couleurs.

Comme indiqué précédemment, pour réaliser le marquage 18, il est possible de prévoir une impression couleur par jet d'encre sur le flanc 14 du pneumatique. Dans ce cas, il peut être utilisé une machine de marquage (non représentée) comprenant des têtes d'impression par jet d'encre, un moyen de support du pneumatique et un moyen d'entrainement en rotation dudit moyen de support. Le moyen de support peut être prévu pour permettre le maintien du pneumatique en position verticale ou en position horizontale pendant l'étape d'impression.

La machine de marquage comprend également une unité de commande pour commander le fonctionnement des têtes d'impression qui peut par exemple se présenter sous la forme d'une carte de circuit imprimé. La machine de marquage comprend encore un dispositif pour le séchage et le durcissement de la ou des couches d'encre déposées sur le flanc, par exemple une lampe ultraviolet ou une lampe infrarouge ou encore un moyen de soufflage d'air chaud. Pour plus de détails sur ce type de machine de marquage, on pourra par exemple se référer au brevet EP-B1-2 639 053.

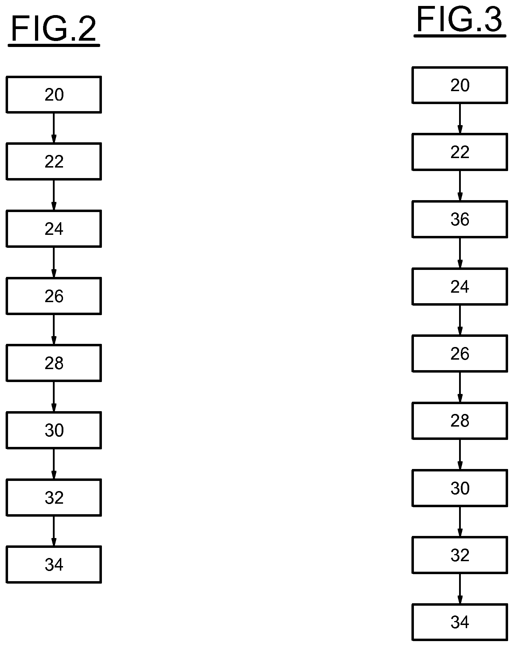

Le marquage du flanc 14 du pneumatique peut être obtenu selon le procédé de marquage de la figure 2.

Dans une première étape référencée 20, le pneumatique équipé de sa jante est gonflé à une pression de gonflage supérieure ou égale à la pression de gonflage nominale recommandée dudit pneumatique. Si le pneumatique équipé de sa jante est gonflé à une pression de gonflage supérieure à la pression de gonflage nominale alors le pneumatique peut par exemple être gonflé à une pression comprise entre 105 % et 300 % de la pression de gonflage nominale du pneumatique. Préférentiellement, la pression de gonflage est comprise entre 120 % et 180 % de la pression de gonflage nominale du pneumatique.

Ensuite, dans une deuxième étape référencée 22, l'ensemble formé par la jante définitive et par le pneumatique gonflé est équilibré. Pour ce faire, une ou plusieurs masses sont fixées sur la jante de sorte à répartir le poids de cet ensemble de manière précise et uniforme. Cette étape peut être réalisée sur une machine d'équilibrage conventionnelle.

Ensuite, dans une troisième étape référencée 24, le pneumatique équipé de sa jante est démonté de la machine d'équilibrage puis monté sur la machine de marquage. Lors de cette étape, les têtes d'impression et le dispositif de séchage et de durcissement sont amenés en regard du flanc à marquer.

Ensuite, lors d'une quatrième étape référencée 26, le pneumatique est entraîné en rotation à vitesse constante par l'intermédiaire du moyen d'entraînement de la machine de marquage.

Dans une cinquième étape référencée 28, les têtes d'impression sont positionnées relativement au flanc du pneumatique selon une position déterminée. Cette étape de positionnement des têtes d'impression est contrôlée par l'unité de commande.

Pour réaliser le positionnement des têtes d'impression, il est par exemple possible de déterminer la position d'un repère prévu sur le flanc du pneumatique. A titre indicatif, ce repère peut par exemple être prévu en saillie ou en creux sur le flanc du pneumatique et se présenter sous la forme d'une texture venue de matière avec ledit flanc et faisant contraste avec celui-ci. Dans ce cas, la machine de marquage comprend un système de mesure de la luminosité, par exemple un spectro-colorimètre, pour déterminer la position de ce repère sur le flanc du pneumatique en fonction de mesures de la luminosité réalisées sur le flanc. Pour ce faire, les mesures de la luminosité sont transmises par le système de mesure à l'unité de commande qui comprend tous les moyens matériels et logiciels pour déterminer la position du repère sur le flanc à partir de ces mesures. L'unité de commande pilote le positionnement des têtes d'impression relativement au flanc du pneumatique.

Puis, dans une sixième étape référencée 30, l'impression couleur par les têtes d'impression est commandée pour obtenir le marquage prédéterminé sur le flanc du pneumatique. L'étape de réalisation du marquage est donc réalisée à l'état gonflé du pneumatique à la valeur de pression de gonflage appliquée à l'étape 20 qui est ici supérieure ou égale à la valeur de pression de gonflage nominale dudit pneumatique.

Ensuite, lors d'une septième étape référencée 32, la mise en marche du dispositif de séchage et de durcissement est commandée pour obtenir le séchage et le durcissement de l'encre déposée sur le flanc. Le pilotage des têtes d'impression et le fonctionnement du dispositif de séchage et de durcissement sont contrôlés par l'unité de commande. Lors des sixième et septième étapes, le pneumatique est toujours entrainé en rotation à vitesse constante.

Enfin, lors d'une huitième étape référencée 34, la rotation du pneumatique est arrêtée et le pneumatique équipé de sa jante est démonté de la machine de marquage.

Après démontage de la machine de marquage et après la fin de la phase de séchage et de durcissement du marquage, il peut être possible de dégonfler le pneumatique équipé de sa jante pour le ramener à la pression de gonflage nominale si le pneumatique équipé de sa jante a été gonflé à une pression de gonflage supérieure à la pression de gonflage nominale.

Dans le procédé de marquage précédemment décrit, le marquage est réalisé sur le pneumatique par impression couleur. Comme indiqué précédemment, il reste possible de prévoir d'autres modes d'obtention du marquage sur le flanc du pneumatique.

Le procédé de marquage illustré à la figure 3 diffère du procédé décrit précédemment en ce qu'à l'étape 20 le pneumatique équipé de sa jante est gonflé à une pression de gonflage inférieure ou égale à la pression de gonflage nominale recommandée dudit pneumatique.

En outre, après l'étape d'équilibrage 22 de l'ensemble formé par la jante et par le pneumatique gonflé et avant l'étape de montage 24 sur la machine de marquage, le procédé comprend une étape de gonflage 36 additionnelle durant laquelle le pneumatique équipé de sa jante est gonflé à une pression de gonflage supérieure à la pression de gonflage nominale recommandée dudit pneumatique. Le pneumatique est par exemple gonflé à une pression comprise entre 105 % et 300 % de la pression de gonflage nominale du pneumatique. Préférentiellement, la pression de gonflage est comprise entre 120 % et 180 % de la pression de gonflage nominale du pneumatique.

Grâce au procédé de l'invention dans lequel le ou les marquages sont réalisés après équilibrage de la roue composée de la jante et du pneumatique, on réduit sensiblement les risques de détérioration du ou de ces marquages avant la livraison du pneumatique au consommateur.

## Revendications

1. Procédé de marquage d'un pneumatique du type comprenant une bande de roulement et deux flancs délimitant ladite bande de roulement, le procédé comprenant :
- une étape de réalisation (30), sur au moins un des flancs du pneumatique monté sur une jante, d'au moins un marquage qui est au moins en partie coloré, **caractérisé en ce qu'**il comprend en outre :
- avant l'étape de réalisation dudit marquage, au moins une étape de gonflage (20) du pneumatique monté sur la jante, et **caractérisé par** une étape d'équilibrage (22) de l'ensemble formé par la jante et le pneumatique à l'état gonflé.

2. Procédé selon la revendication 1, dans lequel le pneumatique est en position verticale ou en position horizontale lors de l'étape de réalisation (30) dudit marquage.

3. Procédé selon la revendication 1 ou 2, dans lequel la position du pneumatique est la même lors de l'étape de réalisation (30) dudit marquage et lors de l'étape d'équilibrage (22).

4. Procédé selon l'une quelconque des revendications précédentes, dans lequel, lors de l'étape d'équilibrage (22), les masses d'équilibrage sont fixées sur la jante, uniquement du côté destiné à être monté du côté intérieur du véhicule.

5. Procédé selon l'une quelconque des revendications précédentes, dans lequel, lors de ladite étape de gonflage (20), le pneumatique est gonflé à une pression supérieure ou égale à la pression de gonflage nominale dudit pneumatique.

6. Procédé selon la revendication 5, dans lequel, lors de ladite étape de gonflage (20), le pneumatique est gonflé à une pression comprise entre 105 % et 300 % de la pression de gonflage nominale dudit pneumatique, préférentiellement entre 120 % et 180 %.

7. Procédé selon l'une quelconque des revendications précédentes, dans lequel ledit marquage est réalisé par impression couleur à l'aide d'au moins une tête d'impression, notamment par impression couleur par jet d'encre.

8. Procédé selon l'une quelconque des revendications précédentes, dans lequel le pneumatique est entraîné en rotation lors de l'étape de réalisation (30) dudit marquage par l'intermédiaire de l'alésage du moyeu de la jante.

9. Procédé selon la revendication 8, dans lequel le pneumatique est entrainé en rotation à vitesse constante lors de l'étape de réalisation (30) dudit marquage.

10. Procédé selon l'une quelconque des revendications précédentes, dans lequel ledit marquage est réalisé sur une surface dudit flanc qui présente une rugosité de surface de paramètre Rₐ inférieure ou égale à 30 µm.

## Patentansprüche

1. Verfahren zum Markieren eines Reifens des Typs mit einem Laufstreifen und zwei Flanken, die den Laufstreifen begrenzen, wobei das Verfahren Folgendes umfasst:
- einen Schritt (30) der Herstellung mindestens einer Markierung auf mindestens einer der Flanken des auf einer Felge montierten Reifens, die mindestens teilweise farbig ist, **dadurch gekennzeichnet, dass** es ferner Folgendes umfasst:
- vor dem Schritt der Herstellung der Markierung, mindestens einen Schritt (20) des Aufpumpens des auf der Felge montierten Reifens, und **gekennzeichnet durch** einen Schritt (22) des Auswuchtens der durch die Felge und den Reifen im aufgepumpten Zustand gebildeten Baugruppe.

2. Verfahren nach Anspruch 1, wobei sich der Reifen während des Schritts (30) zur Herstellung der Markierung in einer vertikalen Position oder in einer horizontalen Position befindet.

3. Verfahren nach Anspruch 1 oder 2, wobei die Position des Reifens während des Schritts (30) des Markierens und während des Schritts (22) des Auswuchtens dieselbe ist.

4. Verfahren nach einem der vorangehenden Ansprüche, wobei während des Schritts (22) des Auswuchtens die Auswuchtgewichte nur auf der für die Montage auf der Innenseite des Fahrzeugs vorgesehenen Seite an der Felge befestigt werden.

5. Verfahren nach einem der vorangehenden Ansprüche, wobei der Reifen während des Schritts (20) des Aufpumpens auf einen Druck aufgepumpt wird, der so groß wie oder größer als der Nennfülldruck des Reifens ist.

6. Verfahren nach Anspruch 5, wobei während des Schritts (20) des Aufpumpens der Reifen auf einen Druck zwischen 105 % und 300 % des Nennfülldrucks des Reifens, vorzugsweise zwischen 120 % und 180 %, aufgepumpt wird.

7. Verfahren nach einem der vorangehenden Ansprüche, wobei die Markierung durch Farbdruck mithilfe mindestens eines Druckkopfs, insbesondere durch Tintenstrahlfarbdruck, erfolgt.

8. Verfahren nach einem der vorangehenden Ansprüche, wobei der Reifen während des Schritts (30) der Herstellung der Markierung über die Bohrung in der Felgennabe in Drehung versetzt wird.

9. Verfahren nach Anspruch 8, wobei der Reifen während des Schritts (30) der Herstellung der Markierung mit konstanter Geschwindigkeit gedreht wird.

10. Verfahren nach einem der vorangehenden Ansprüche, wobei die Markierung auf einer Oberfläche der Flanke erfolgt, die eine Oberflächenrauheit mit dem Parameter Rₐ von 30 µm oder weniger aufweist.

## Claims

1. Method for marking a tyre of the type comprising a tread and two sidewalls delimiting said tread, the method comprising:
- a step (30) of making, on at least one of the sidewalls of the tyre mounted on a rim, at least one marking which is at least partially coloured, **characterized in that** it also comprises:
- before the step of making said marking, at least one step (20) of inflating the tyre mounted on the rim, and **characterized by** a step (22) of balancing the assembly formed by the rim and the tyre in the inflated state.

2. Method according to Claim 1, wherein the tyre is in a vertical position or in a horizontal position during the step (30) of making said marking.

3. Method according to Claim 1 or 2, wherein the position of the tyre is the same during the step (30) of making said marking and during the balancing step (22).

4. Method according to any one of the preceding claims, wherein, during the balancing step (22), the balancing weights are fixed to the rim, only on the side intended to be mounted on the inner side of the vehicle.

5. Method according to any one of the preceding claims, wherein, during said inflation step (20), the tyre is inflated to a pressure greater than or equal to the nominal inflation pressure of said tyre.

6. Method according to Claim 5, wherein, during said inflation step (20), the tyre is inflated to a pressure of between 105% and 300% of the nominal inflation pressure of said tyre, preferably between 120% and 180%.

7. Method according to any one of the preceding claims, wherein said marking is made by colour printing, in particular by inkjet colour printing.

8. Method according to any one of the preceding claims, wherein the tyre is driven in rotation during the step (30) of making said marking via the bore in the hub of the rim.

9. Method according to Claim 8, wherein the tyre is driven in rotation at a constant speed during the step (30) of making said marking.

10. Method according to any one of the preceding claims, wherein said marking is made on a surface of said sidewall which has a surface roughness of parameter Rₐ less than or equal to 30 pm.
